# EUROPEAN PATENT APPLICATION

(11) **EP 1 860 172 A1**
(43) Date of publication of application: **28.11.2007**
(21) Application number: 05726638.9
(22) Date of filing: 17.03.2005
(51) Int. Cl.: C09K 11/64, H01J 1/63

(54) **DISPLAY APPARATUS AND GREEN PHOSPHOR**

(71) Applicant: Hitachi Plasma Patent Licensing Co., Ltd., Chiyoda-ku Tokyo 100-0004 (JP)
(72) Inventor: MISAWA, Tomonari, kahara-ku, Kawasaki-shi, Kanagawa 211858 (JP); FUKUTA, Shinya, kahara-ku, Kawasaki-shi, Kanagawa 211858 (JP); ONIMARU, Toshiaki, kahara-ku, Kawasaki-shi, Kanagawa 211858 (JP); SAKATA, Hironori, kahara-ku, Kawasaki-shi, Kanagawa 211858 (JP); KASAHARA, Shigeo, kahara-ku, Kawasaki-shi, Kanagawa 211858 (JP)
(74) Representative: Calderbank, Thomas Roger
(86) International application number: PCT/JP2005/004796
(87) International publication number: WO 2006/098032

(57) **Abstract**

A display device comprising at least one phosphor layer, the phosphor layer containing a green phosphor of β alumina structure represented by the following formula: A(Zn_{1-x-y}MgₓMn_{y})Al₁₀O₁₇ wherein, A is an element selected from Ca, Ba and Sr, x is a number satisfying 0.01 ≤ x ≤ 0.3, and y is a number satisfying 0.02 ≤ x ≤ 0.14.

## Description

### Technical Field

The present invention relates to a display device and a green phosphor. More particularly, the present invention relates to a display device such as a plasma display panel (PDP) equipped with a phosphor layer containing a green phosphor, and a green phosphor capable of converting irradiated light into light having lower energy (long wavelength).

### Background Art

A phosphor is used broadly in various fields. For example, the phosphor is used as a phosphor for a lighting device such as a fluorescent lamp, a phosphor for a display device such as a PDP, and a phosphor for an x-ray pickup tube. For example, in a color display device, three-color phosphors of red, blue and green are used in general, and white can be obtained by combining fluorescence from the three-color phosphors. In particular, because the green phosphor is an important phosphor to determine luminance of white, an offer of a green phosphor that generates fluorescence having high luminance and high color purity is desired.

(Ba, Mn)A1₁₂O₁₉, (Y, Tb)BO₃ and Zn₂SiO₄ : Mn are well known as conventional green phosphors. Further, as a blue phosphor, a phosphor represented by BaMgAl₁₀O₁₇ : Eu²⁺ (a part of Mg is substituted with Ca, Cu, Zn, Pb, Cd, Mg or Sn) is also known (Japanese Unexamined Patent Application No. 2002-173677 : Patent Document 1).

Patent Document 1: Japanese Unexamined Patent Application No. 2002-173677

### DISCLOSURE OF THE INVENTION

### PROBLEMS TO BE SOLVED BY THE INVENTION

In the above-described green phosphors, there is a problem that (Ba, Mn)Al₁₂O₁₉ has low luminance although is has high color purity. On the other hand, there is a problem that (Y, Tb)BO₃ has low color purity, but has high luminance.

Zn₂SiO₄ : Mn has a good balance of color purity and luminance compared with the above-described green phosphors, and is often used in a display device such as a PDP.

However, the color purity and the luminance of Zn₂SiO₄ : Mn is not sufficient, and further improvement of the color purity and the luminance has been desired.

### MEANS FOR SOLVING THE PROBLEMS

Thus, according to the present invention, there is provided a display device comprising at least one phosphor layer, the phosphor layer containing a green phosphor of β alumina structure represented by the following formula:

A(Zn_{1-x-y}MgₓMn_{y})AL₁₀O₁₇

wherein, A is an element selected from Ca, Ba and Sr, x is a number satisfying 0.01 ≤ x ≤ 0.3, and y is a number satisfying 0.02 ≤ x ≤ 0.14.

Furthermore, according to the present invention, there is provided a green phosphor containing a β alumina structure represented by the following formula:

A(Zn_{1-x-y}MgₓMn_{y})Al₁₀O₁₇

wherein, A is an element selected from Ca, Ba and Sr, x is a number satisfying 0.01 ≤ x ≤ 0.3, and y is a number satisfying 0.02 ≤ x ≤ 0.14.

### EFFECTS OF THE INVENTION

According to the present invention, there can be provided a display device, in which the green phosphor excellent in characteristics such as color purity, luminance and lifetime, especially color purity, is contained in the phosphor layer.

### BRIEF DESCRIPTION OF THE DRAWINGS

FIG. 1 is a schematic view of the β alumina structure;
FIG. 2 is a schematic perspective view of a PDP;
FIG. 3 is a graph for showing the Mg substitutional amount dependence of the emission amount of the phosphor in Example 1;
FIG. 4 is a graph for showing the relationship between the lighting time and the peak intensity in Example 3.

### EXPLANATION OF REFERENCE NUMERALS

- 11, 21: substrate
- 17, 27: dielectric layer
- 18: protective layer
- 28: phosphor layer
- 29: rib
- 30: space
- 41: transparent electrode
- 42: bus electrode
- 100: PDP
- A: address electrode

### BEST MODE FOR CARRYING OUT THE INVENTION

First, a display device of the present invention is a display device having at least one phosphor layer, in which the phosphor layer contains a green phosphor of β alumina structure represented by the following formula:

A(Zn_{1-x-y}MgₓMn_{y})Al₁₀O₁₇

wherein, A is an element selected from Ca, Ba and Sr, x is a number satisfying 0.01 ≤ x ≤ 0.3, and y is a number satisfying 0.02 ≤ x ≤ 0.14. Moreover, x and y mean a molar ratio (an atomic ratio).

"A" in the above-described formula may be at least any one of Ca, Ba and Sr, and may contain two or all of these elements. Specifically, combinations of Ca/Ba, Ca/Sr, Ba/Sr and Ca/Ba/Sr are given.

It is not preferable that "x" is smaller than 0.01 or larger than 0.3 because an increase of luminance is not enough. It is more preferable that "x" is 0.05 to 0.2.

It is not preferable that "y" is smaller than 0.02 and larger than 0,14 because an increase of luminance is not enough. More preferably, "y" is a range of 0.03 to 0.10.

Next, a green phosphor which "A" containing both Ba and Sr can be represented by the following formula:

(Ba_{1-z}Sr_{z}) (Zn_{1-x-y}MgₓMn_{y}) Al₁₀O₁₇

wherein, x and y are the same definition as described above, and z is a number satisfying 0 < z < 1.

Here, in the case of the above-described green phosphor containing both Ba and Sr, when "x" is in a range of 0.01 to 0.07, and "z" is 0.01 to 0.999, high luminance and high color purity can be obtained especially.

Furthermore, the above-described green phosphor has AZnAl₁₀O₁₇ as a mother material and Mn and Mg as a center of emission. Other mother materials such as CaAl₁₂O₁₉ and SrAl₁₂O₁₉ may be mixed with the mother material at an appropriate ratio to form a mixed crystal.

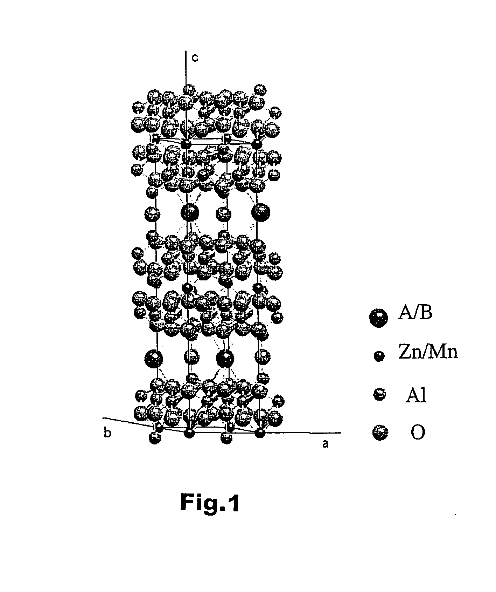

A crystal structure of the above-described green phosphor founds that there are many green phosphors showing high luminance and high color purity in the case that the mother material has β alumina structure shown in Fig. 1.

A wavelength of light irradiated to bring out green fluorescence from the above-described green phosphor is not especially limited. In the case of a display device such as a plasma display panel (PDP), a wavelength in a vacuum ultraviolet region (for example, 147 nm and 172 nm) is preferable.

Furthermore, other green phosphors below may be mixed into the above-described green phosphor:
(1) A green phosphor having a magnetoplumbite type crystal structure containing at least Mn, La and Tb;
(2) A green phosphor having a magnetoplumbite type crystal structure containing at least Tb and La, and not containing Ce; and
(3) A green phosphor having a magnetoplumbite type crystal structure containing at least Mn, La and Zn.

Many of these other green phosphors have larger luminance than the above-described green phosphor, and by mixing with the above-described green phosphor, both the color purity and luminance can be improved further.

Specific examples of the other green phosphors include:
LaMgAl₁₁O₁₉ : Mn,Tb, LaₓAl_{y}O_{z} (x : y : z = 0.5 to 1.2 : 11 to 12 : 18 to 19.5), etc. on (1),
LaMgAl₁₁O₁₉ : Tb, LaMgAl₁₁O₁₉ : Mn,Tb, etc. on (2), and
LaMgAl₁₁O₁₉, (La₁₋ₓTbₓ)_{y} (Mg_{1-a-b}MnₐZn_{b})Al_{z}O_{1.5(z+y)+1} (in the formula, 0 ≤ x ≤ 0.5, 0.8 ≤ y ≤ 1.2, 0 ≤ a+b ≤ 1, and 8 ≤ z ≤ 30), etc. on (3).

The above-described green phosphor can be formed with a well known method. For example, compounds containing A, Zn, Mn and Al are weighted so as to be a desired molar ratio. These compounds are sintered. Subsequently, by grinding and classifying the obtained sintered body of the green phosphor, a green phosphor having a predetermined particle diameter can be obtained.

Specifically, sintering is preferably performed at a sintering temperature of 1300 to 1700°C for 1 to 10 hours in a nitrogen atmosphere. Moreover, in order to lower the sintering temperature, a reaction promoter consisting of halides such as AlF₂, MgF₂, LiF and NaF may be used within a range of not disturbing the effect of the present invention.

Moreover, other green phosphors can be formed in the same way as the above-described green phosphor.

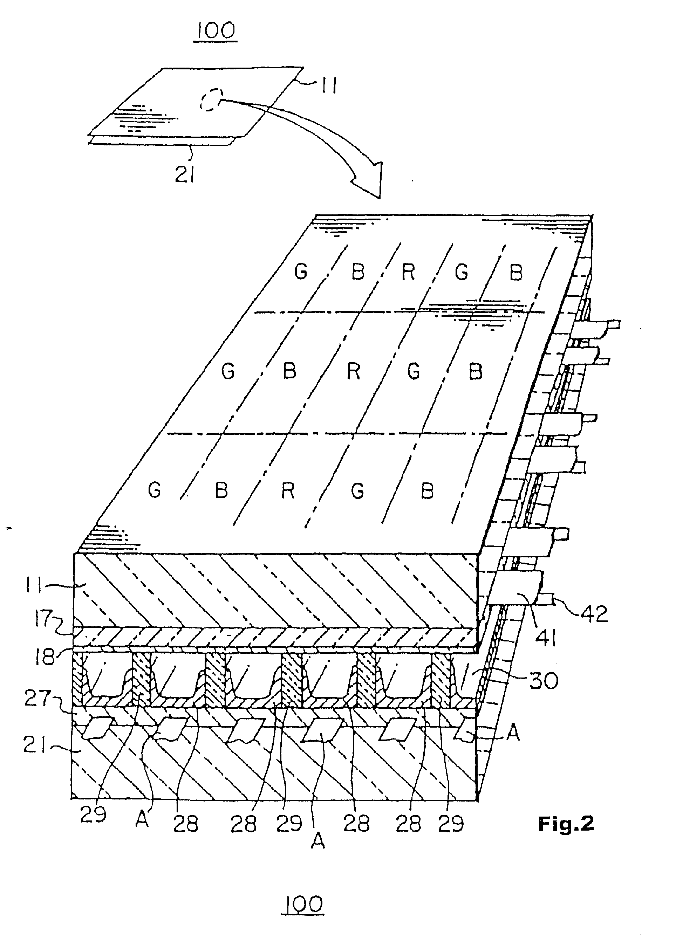

A display device in the present invention includes a PDP, a CRT, a fluorescent display tube, and an x-ray pickup tube. A PDP in Fig. 2 is described below as one example of the display device in the present invention.

The PDP in Fig. 2 is a three-electrode AC type surface discharge PDP. Moreover, the present invention is not limited to this PDP, and can be applied to any configuration if the PDP contains a green phosphor. For example, the PDP is not limited to an AC type and may use a DC type, and may be used in any PDPs of a reflection type and a transmission type.

A PDP 100 in Fig. 2 is configured with a front substrate and a rear substrate.

First, the front substrate generally comprises a plurality of display electrodes formed on a substrate 11, a dielectric layer 17 formed so as to cover the display electrodes, and a protective layer 18 formed on the dielectric layer 17 and exposed to a discharge space.

The substrate 11 is not especially limited, and includes a quartz glass substrate, a glass substrate, and a silicon substrate.

The display electrode comprises a transparent electrode 41 such as ITO. Further, in order to lower resistance of the display electrode, a bus electrode (for example, a three-layer structure of Cr/Cu/Cr) 42 may be formed on the transparent electrode 41.

The dielectric layer 17 is formed from a material used normally in a PDP. Specifically, the dielectric layer can be formed by applying a paste including a low melting point glass and a binder on the substrate and sintering the obtained substrate.

The protective layer 18 is provided to protect the dielectric layer 17 from damage due to a collision of ions generated by a discharge when displaying. The protective layer 18 comprises MgO, CaO, SrO, BaO, etc. for example.

Next, the rear substrate generally comprises a plurality of address electrodes A formed on a substrate 21 in the direction crossing with the above-described display electrodes, a dielectric layer 27 covering the address electrodes A, a plurality of striped ribs 29 formed on the dielectric layer 27 between the adjacent address electrodes A, and a phosphor layer 28 formed between the ribs 29 including sides of the walls.

The same kinds as the substrate 11 and the dielectric layer 17 configuring the above-described front substrate can be used for the substrate 21 and the dielectric layer 27.

The address electrode A comprises a metal layer such as Al, Cr and Cu and a three-layer structure of Cr/Cu/Cr for example.

The rib 29 can be formed by applying a paste including a low melting point glass and a binder to the dielectric layer 27, drying, and then cutting off with a sandblasting method. Further, in the case of using a photosensitive resin on the binder, the rib can be formed by exposing using a mask of a predetermined shape, developing, and then sintering.

In Fig. 2, the phosphor layer 28 is formed between the ribs 29, and the above-described green phosphor can be used as a raw material of this phosphor layer 28. A forming method of the phosphor layer 28 is not especially limited, and a well known method can be mentioned. For example, the phosphor layer 28 can be formed by applying a paste, in which a phosphor is dispersed in a solution obtained by dissolving a binder in a solvent, between the ribs 29 and sintering under an air atmosphere.

Next, the PDP 100 can be formed by making the above-described front substrate and the rear substrate to oppose each other with display electrodes (41 and 42) and the address electrode A facing an inner side so that the both display electrodes are orthogonal to the address electrodes A, and by filling discharge gas in space 30 surrounded with the rib 29.

Moreover, in the above-described PDP, the phosphor layer is formed, in the rib, on the dielectric layer and the protective film prescribing the discharge space, and on the rib and the dielectric layer of the rear substrate side. However, the phosphor layer may be formed also on the protective film of the front substrate side with the same method.

### Examples

Hereinbelow, Examples in the present invention are explained. Moreover, the present invention is not limited to Examples below.

### Example 1

An appropriate amount of ethanol was added to each of raw materials of molar ratio below to mix for 3 hours.

**[Table 1]**

| Material | Molar ration | | | |
|---|---|---|---|---|
| | Phosphor a | Phosphor b | Phosphor c | Phosphor c |
| BaCO₃ | 1 | 1 | 1 | 1 |
| ZnO | 0.97 | 0.96 | 0.87 | 0.67 |
| MgCO₃ | 0 | 0.01 | 0.1 | 0.3 |
| MnCO₃ | 0.03 | 0.03 | 0.03 | 0.03 |
| Al₂O₃ | 5 | 5 | 5 | 5 |
| AlF₃ | 0.03 | 0.03 | 0.03 | 0.03 |

The obtained mixture was fired at 1300°C under a nitrogen atmosphere for 4 hours and the obtained sintered body was ground to prepare phosphors "a" to "d" represented with Ba(Zn_{0.97-x}MgₓMn_{0.03})Al₁₀O₁₇ (0 ≤ x ≤ 0.3). The obtained phosphors were confirmed to be a crystal having a β alumina structure by x-ray diffraction.

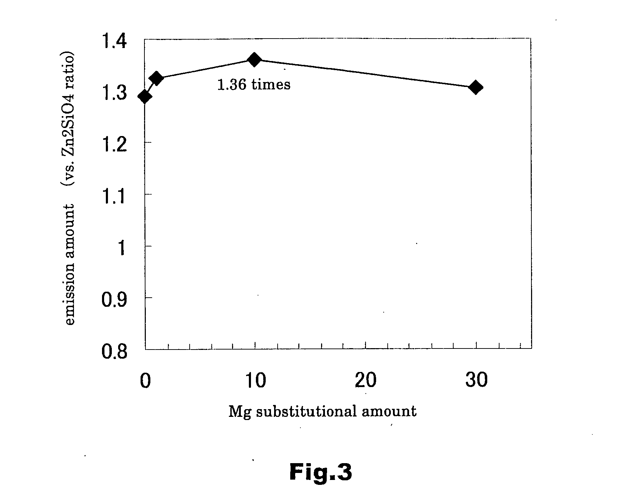

Furthermore, emission amounts of the phosphors "a" to "d" were measured, and the emission amounts are shown in Fig. 3 as a ratio to the emission amount of (Zn, Mn)₂SiO₄ being 1. Further, chromaticity coordinates (x, y) of each phosphor are shown in Table 2 together with the emission amount.

**[Table 2]**

| | Mg Addition amounts | Chromaticity Coordinate X | Chromaticity Coordinate Y | Emission amount |
|---|---|---|---|---|
| Zn2SiO4:Mn | - | 0.226 | 0.710 | 1.00 |
| Phosphor a | - | 0.115 | 0.745 | 1.29 |
| Phosphor b | 0.01 | 0.114 | 0.746 | 1.32 |
| Phosphor c | 0.1 | 0.111 | 0.749 | 1.36 |
| Phosphor d | 0.3 | 0.117 | 0.742 | 1.30 |

From Fig. 3, it is found that, when the range of the Mg addition amounts is 0.01 to 0.3, high luminance and high color purity can be obtained

### Example 2

Phosphors e was prepared in the same manner as Example 1 using raw materials of molar ratio in Table 3.

**[Table 3]**

| Material | Molar ratio |
|---|---|
| BaCO₃ | 0.7 |
| SrCo₃ | 0.3 |
| ZnO | 0.94 |
| MgCO₃ | 0.03 |
| MnCO₃ | 0.03 |
| Al₂O₃ | 5 |
| ALF₃ | 0.03 |

The emission amounts of the phosphors "e" was measured, and it was 1.41 as a ratio to the emission amount of (Zn, Mn)₂SiO₄ being 1. Further, the chromaticity coordinate x was 0.118, and the chromaticity coordinate y was 0.748.

It is found that, the emission amounts of a phosphor "e" containing Sr can be increased more.

### Example 3

A PDP having a configuration below were prepared using a phosphor "c" [(Ba_{0.7}Sr_{0.3})(Zn_{0.94}Mg_{0.03}Mn_{0.03})Al₁₀O₁₇] and BAM. Configuration of PDP:
Display electrodes width of a transparent electrode: 280 µm, width of a bus electrode 100 µm
Discharge gap between the display electrodes 100 µm
Thickness of the dielectric layer 30 µm
Height of the rib 100 µm
Arranging pitch of the rib 360 µm
Discharge gas Ne-Xe (5%)
Gas pressure 500 Torr

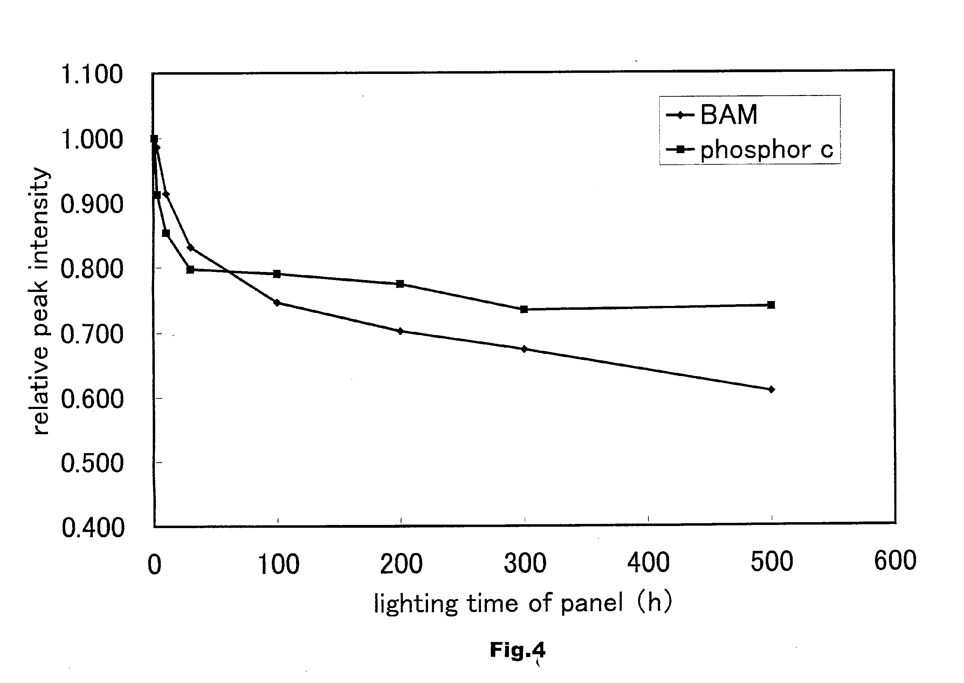

The obtained PDP was lighted up continuous for 500 hours as an accelerated lifetime test, and peak intensity was measured at the lighting of every hour. The obtained peak intensities are shown in Fig. 4 as relative peak intensities when the peak intensity when it is initially lighted is set to 1.

From Fig. 4, it is found that the phosphor "c" has a longer lifetime than BAM.

### INDUSTRIAL APPLICABILITY

Display characteristics of a display device such as a PDP, a CRT, a fluorescent display tube, and an x-ray pickup tube can be improved by using a phosphor in the present invention that is superior in characteristics such as color purity, luminance, and lifetime, especially color purity.

## Claims

1. A display device comprising at least one phosphor layer, the phosphor layer containing a green phosphor of β alumina structure represented by the following formula:
A(Zn_{1-x-y}MgₓMn_{y})Al₁₀O₁₇
wherein, A is an element selected from Ca, Ba and Sr, x is a number satisfying 0.01 ≤ x ≤ 0.3, and y is a number satisfying 0.02 ≤ x ≤ 0.14.

2. A display device according to claim1, wherein the phosphor is represented by the following formula:
(Ba_{1-z}Sr_{z}) (Zn_{1-x-y}MgₓMn_{y}) Al₁₀O₁₇
wherein, x and y are the same definition as described above, and z is a number satisfying 0 < z < 1.)

3. A display device according to claim 1, wherein the phosphor emits a green fluorescence by the irradiated light of a vacuum ultraviolet ray.

4. A green phosphor containing a β alumina structure represented by the following formula:
A(Zn_{1-x-y}MgₓMn_{y})Al₁₀O₁₇
wherein, A is an element selected from Ca, Ba and Sr, x is a number satisfying 0.01 ≤ x ≤ 0.3, and y is a number satisfying 0.02 ≤ x ≤ 0.14.
